# EUROPEAN PATENT APPLICATION

(11) **EP 2 053 873 A1**
(43) Date of publication of application: **29.04.2009**
(21) Application number: 07785360.4
(22) Date of filing: 15.08.2007
(51) Int. Cl.: H04Q 7/38, H04L 9/32

(54) **METHOD AND APPARATUS FOR TRANSMIT-RECEIVING EMERGENCY SERVICES**

(30) Priority: 16.08.2006 CN 200610109839; 13.10.2006 CN 200610140897; 31.12.2006 CN 200610167371
(71) Applicant: Huawei Technologies Co., Ltd., Longgang District, Shenzhen Guangdong 518129 (CN)
(72) Inventor: ZHAO, Peng, Shenzhen Guangdong 518129 (CN)
(74) Representative: Gulde Hengelhaupt Ziebig & Schneider
(86) International application number: PCT/CN2007/002464
(87) International publication number: WO 2008/022554

(57) **Abstract**

Methods and apparatuses for transmitting and receiving emergency service are provided to solve the problem that the user maliciously performs emergency registration with the emergency user ID to receive the unauthorized service. The method for initiating callback in the emergency service includes forwarding the request message to the callee connection network and informing the callee connection network of the identity of the initiator identity after the callback initiator side authenticates the identity of the initiator of the received request message. The method for receiving callback in the emergency service includes: recognizing, by the callee connection network, the identity of the initiator who initiates the callback request message transmitted from the call initiator-side network and performing post-processing according to whether the identity of the initiator is a valid PSAP.

## Description

### FIELD OF THE INVENTION

The present invention relates to communication field, and more specifically, to a method and apparatus for transmitting and receiving emergency services.

### BACKGROUND

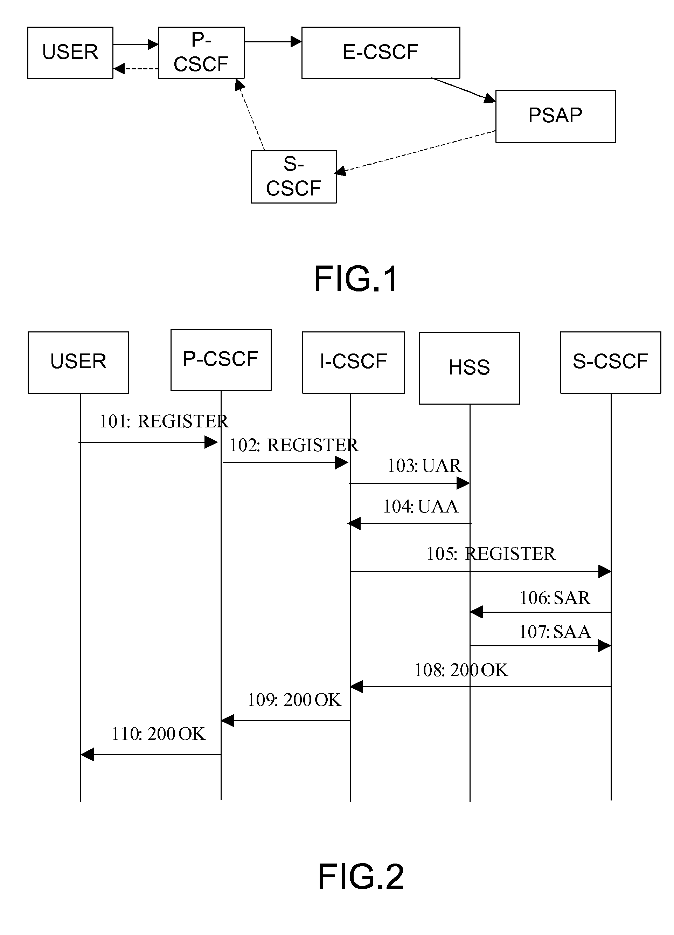

In the case of emergency, subscribers may call Public Safety Answering Point (PSAP) for help. The PSAP may also call back after the subscriber hung up so as to get more information. In such an emergency situation, the action that the PSAP calls back initiatively is referred to as callback. Figure 1 illustrates a flowchart of emergency call in an IMS domain.

In Figure. 1, only several main net elements are listed, including a user terminal, a Proxy Call Session Control Function (P-CSCF) entity and an Emergency Call Session Control Function (E-CSCF) entity, and a PSAP. The PSAP described herein may include a public security answering point and an emergency call center (police office, fire-fighting department, etc.). Additionally, a Service Call Session Control Function (S-CSCF) entity may further be included. In Figure 1, a call procedure initiated by the user is illustrated by continuous line, and a call procedure initiated by the PSAP, as illustrated by dashed line, may also be referred to as a callback process. During the call procedure, the P-CSCF may check the user ID (user identifier) used by the user in the request and may insert the user ID confirmed by the network.

In order to perform callback, the user has to initiate an emergency registration process. During the emergency registration process, a special emergency user ID is used. Through the registration process, the S-CSCF will be required to bond the emergency user ID and the contact address of the user together. In this way, the request for calling back the emergency user ID initiated by the PSAP is able to reach the contact address of the user by S-CSCF transmitting the request. To make ensure that the PSAP of the Public Switch Telephone Network (PSTN) is able to call the user back, a related user ID (tel URI) is required to be included in an implicit set of emergency user IDs. The emergency user IDs mentioned herein may include these related tel user ID (tel uri), or may not include these tel user ID. The so called implicit registration set means that if one user ID in the set is registered, all of the user IDs in this set are registered. As shown in Figure 2, the registration process includes following steps.

In step 101, the user initiates a REGISTER message which carries the emergency user ID.

In step 102, P-CSCF forwards the received REGISTER message to an Interrogating Call Session Control Function (I-CSCF) entity in the user domain. The message includes an identifier of the domain where P-CSCF locates.

In step 103, I-CSCF transmits a UAR message to a Home Subscriber Server (HSS). The UAR message carries the identifier of the domain where P-CSCF locates.

In step 104, HSS performs a roaming restriction check according to the identifier of the domain where P-CSCF locates in the UAR message. If the user is from the domain where users are not allowed to roam, the HSS will return a failure response to the I-CSCF. If the request message is valid, a UAA message will be used for returning an appropriate S-CSCF to the I-CSCF or return information which allows the I-CSCF to choose S-CSCF. During the emergency registration process, the HSS may skip the roaming restriction check.

In step 105, the I-CSCF refers to the information in the UAA and forwards the REGISTER message to the related S-CSCF.

In step 106, the S-CSCF transmits an SAR message to the HSS and refreshes the HSS record.

In step 107, the HSS returns an SAA message which carries configuration service information of the user.

In step 108, the S-CSCF stores the configuration service information locally so that the information may be used to invoke associated configuration service for the user during later session process. Also, the S-CSCF returns a success response to the user. The response information includes the implicit registration set associated with the registered user ID.

In steps 109∼step 110, the response is delivered to user equipment (UE) through I-CSCF and P-CSCF.

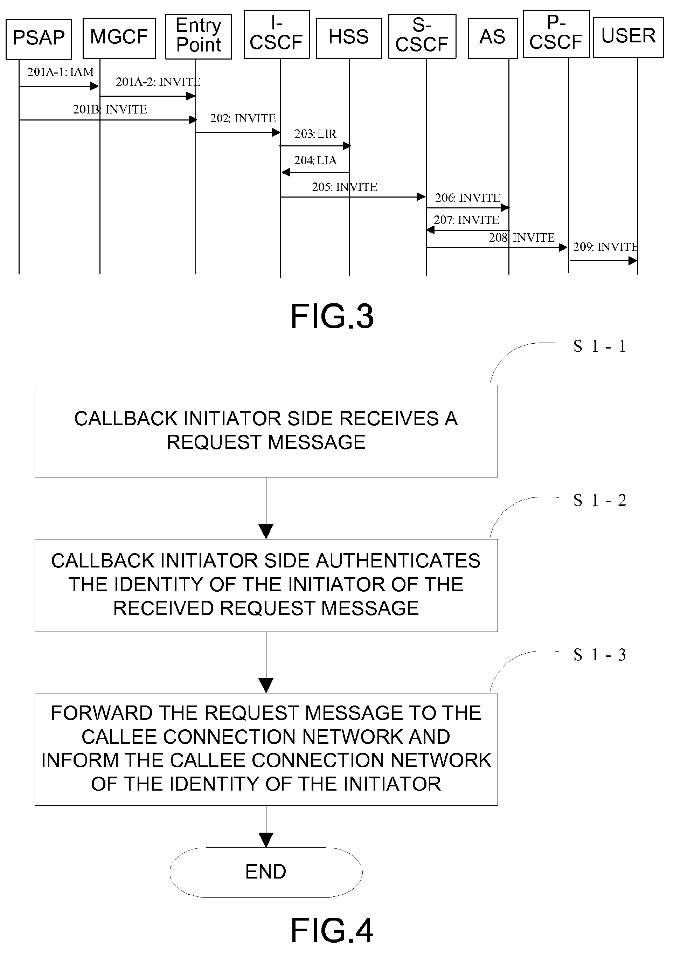

After the user completes the registration, the PSAP may utilize the user ID to initiate a callback to the user. As shown in Figure 3, the detailed callback process includes following steps.

In steps 201A-1∼step 201A-2, the PSAP located in the PSTN initiates a call to the home network of the user through a Media Gateway Control Function (MGCF) entity. The MGCF needs to convert the signaling transmitted from the PSAP to an SIP signaling.

In step 201B, the PSAP located in the IP domain utilizes the Session Initiation Protocol (SIP) signaling directly to initiate a call to the home network of the user.

In step 202, after the entry point (Interconnection Border Control Function, IBCF entity) of the user home network or the I-CSCF receives an INVITE message, the IBCF or I-CSCF checks the INVITE message. If the message is found to be from an untrusted domain, some of the fields in the message will be deleted, e.g., identity of the initiator (P-Asserted-Identity field) which initiates the message. The message is then delivered to I-CSCF.

In step 203, the I-CSCF may transmit an LIR command and acquire the address of S-CSCF from HSS.

In step 204, the HSS returns an LIA command to the I-CSCF, including the name of the associated S-CSCF.

In step 205, the I-CSCF forwards the INVITE message to the S-CSCF.

In steps 206-step 207, the S-CSCF invokes associated service at the application server (AS) according to the contracted information of the user.

In steps 208-step 209, the S-CSCF transmits the message to the user through P-CSCF again.

The user may be entitled to many extra rights when using emergency registration. For example, when the user is in a non-contracted roaming region, the user may receive PSAP call service through emergency registration. Alternatively, when the subscriber is delinquent, the user may receive PSAP call service through emergency registration. Accordingly, once a malicious user breaches the roaming and charge restriction by initiating the emergency registration process, the other users may call this user via the emergency user ID of the user. Thus, the user may receive the non-contracted service illegally.

In the process of coming up with the idea of the invention, the inventor notices that there exists a problem in the prior art, that is, the users may maliciously perform emergency registration with the emergency user ID to receive the unauthorized service.

### SUMMARY

Methods and apparatuses for transmitting and receiving emergency service are provided according to the embodiments of the present invention. In this way, the problem that the users may maliciously perform emergency registration with the emergency user ID to receive unauthorized services is solved.

A method for call connection in the emergency service is provided according to the embodiments of the present invention provides, so that the problem that the user maliciously performs emergency registration with the emergency user ID to receive the non-contracting service is solved.

An authentication entity is provided according to the embodiments of the present invention. The authentication entity is located at the callback initiator-side network in the emergency service. The authentication entity is configured to authenticate the identity of the initiator that initiates the request message, forward the request message to the callee connection network, and inform the callee connection network of the identity of the initiator.

A recognition entity is provided according to the embodiments of the present invention. The recognition entity is located in the callee connection network in terms of the callback in the emergency service. The recognition entity is configured to recognize the identity of the initiator of the callback request message from the call-initiator side network and perform post-processing according to whether the identity of the initiator is a valid PSAP.

A method for initiating a callback in the emergency service is provided according to the embodiments of the present invention. The method includes:
authenticating, by the callback initiator side, the identity of the initiator who initiates the received request message;
forwarding the request message to the callee connection network; and
informing the callee connection network of the identity of the initiator.

A method for receiving a callback in the emergency service is provided according to the embodiments of the present invention. The method includes:
recognizing the identity of the initiator of the callback request message transmitted from the call initiator-side network; and
performing post-processing according to whether the identity of the initiator is a valid PSAP.

A method for call connection in the emergency service is provided according to the embodiments of the present invention. The method includes:
receiving a user-initiated call by a network which handles the call connection for the calling party;
determining, by the network which handles the call connection for the calling party, the call as associated with the emergency registration; and
processing the call according to a service logic policy.

The methods and apparatuses for transmitting and receiving emergency service according to the embodiments of the present invention prevent the user from receiving unauthorized service by recognizing the identity of the initiator of the emergency call.

A method for call connection in the emergency service is further provided according to the embodiments of the present invention. Unlike the prior art, the device which handles call connection according to the embodiments of the present invention, does not directly handle the received call request, rather, it determines if the call is associated with the emergency registration first. When the network which handles call connection for the calling party determines that the call is associated with the emergency registration, it handles the call according to a service logic policy. In this way, the present invention effectively prevents the user from receiving unauthorized services.

### BRIEF DESCRIPTION OF THE DRAWINGS

Figure 1 shows a flowchart of the emergency call in an IMS domain in the prior art;

Figure 2 shows an emergency registration flowchart in a prior art;

Figure 3 shows a callback flowchart in the prior art;

Figure 4 shows a flowchart of a method for initiating a callback in the emergency service according to an embodiment of the present invention;

Figure 5 is a structural diagram illustrating a recognition entity according to a second embodiment of the present invention;

Figure 6 is a structural diagram illustrating a recognition entity according to a third embodiment of the present invention;

Figure 7 is a flowchart of receiving a callback in the emergency service according to an embodiment of the present invention;

Figure 8 is a signaling flowchart of a first embodiment of a method for transmitting and receiving the callback in the emergency service according to the embodiments of the present invention;

Figure 9 is a signaling flowchart of a second embodiment of a method for transmitting and receiving the callback in the emergency service according to the embodiments of the present invention;

Figure 10 is a signaling flowchart of a third embodiment of a method for transmitting and receiving the callback in the emergency service according to the embodiments of the present invention;

Figure 11 is a signaling flowchart of a fourth embodiment of a method for transmitting and receiving the callback in the emergency service according to the embodiments of the present invention;

Figure 12 is a flowchart of a method for call connection in the emergency service according to an embodiment of the present invention;

Figure 13 is a signaling flowchart of a first embodiment of a method for call connection in the emergency service according to the embodiments of the present invention;

Figure 14 is a signaling flowchart of a second embodiment of a method for call connection in the emergency service according to the embodiments of the present invention;

Figure 15 is a signaling flowchart of a third embodiment of a method for call connection in the emergency service according to the embodiments of the present invention;

Figure 16 is a signaling flowchart of a fourth embodiment of a method for call connection in the emergency service according to the embodiments of the present invention;

Figure 17 is a signaling flowchart of a fifth embodiment of the method for call connection in the emergency service according to the embodiments of the present invention; and

Figure 18 is a signaling flowchart of a sixth embodiment of the method for call connection in the emergency service according to the embodiments of the present invention.

### DETAILED DESCRIPTION

To prevent the user from maliciously performing emergency registration with the emergency user ID to receive unauthorized service and to further provide a mechanism of authenticating the identity of the initiator in the callback initiator-side network in terms of the emergency service and method thereof so as to solve the problem that the called party is unable to know the real identity of the initiator, the main principle of an authentication entity and a method for initiating the callback in the emergency service according to embodiments of the present invention is proposed below. When receiving the request for calling the emergency user ID, the initiator-side network needs to authenticate the identity of the message initiator. If the initiator is PSAP, the request is handled according to a callback procedure. If the identity of the initiator cannot be confirmed as PSAP, the request can be rejected directly or be rejected according to a local policy (for example, when the user is not allowed to receive service under the circumstances when the user is located in the non-contracted roaming region, or when the subscriber is delinquent or under other normal circumstances). Furthermore, considering the roaming condition and the PSAP is located dispersedly, a direct or indirect trusted domain of the home network of the called party may be selected at the roaming region to authenticate PSAP identity, and the call request may be transmitted to the home network of the called party via such trusted domain. Therefore, the trusted domain has to ensure that the callback initiated from the domain is legal so that the home network of the called party may authenticate the initiator identity.

The authentication entity according to the embodiments of the present invention may locate in the S-CSCF, P-CSCF, MGCF, IBCF, E-CSCF or I-CSCF. Alternatively, an interface may exist between the authentication entity and S-CSCF, P-CSCF, MGCF, IBCF, E-CSCF or I-CSCF, all of which are independent of each other. After authenticating the received identity of the initiator which initiates the request message, the authentication entity is used to forward the request message to the callee connection network and inform the callee connection network of the identity of the initiator who initiates the request message.

Depending on whether or not the identity of the initiator of the request message received by the authentication entity is identified as PSAP, there are two processing methods as described below.

SCENARIO ONE: When the request message received by the authentication entity carries an PSAP indicator or when the received request message is transmitted by a specific IP contact manner, i.e., the identity of the initiator of the received request message is identified as PSAP, the authentication entity modifies the identifier after authenticating the identity of the initiator of the request message. If the initiator is PSAP, such identifier is confirmed and transmitted directly or via a specific IP contact manner to the callee connection network; otherwise, the request message is rejected directly. Alternatively, the indicator included in the message is deleted or the request message is transmitted to the callee connection network via a non-specific IP contact manner. Accordingly, the callee connection network may be able to know the identity of the initiator of the request message.

SCENARIO TWO: When the request message received by the authentication entity does not carry a PSAP indicator or when the received request message is transmitted by a non-specific IP contact manner, i.e., the identity of the initiator of the received request message is not identified as PSAP, the authentication entity performs a corresponding processing after authenticating the identity of the initiator of the request message. If the initiator is confirmed as PSAP, a PSAP indicator is added to the request message or the request message is transmitted via a specific IP contact manner to the callee connection network. If the initiator is confirmed as not being the PSAP, the request message is rejected directly. Alternatively, the request message is transmitted directly or transmitted via a non-specific IP contact manner to the callee connection network. Accordingly, the callee connection network may be able to know the identity of the initiator of the request message.

If the authentication entity is located in the trusted domain of the callee continuation network, the callee connection network is made to trust and accept the authentication upon the initiator identity done by the authentication entity so that the problem that the user may receive unauthorized service is better prevented.

With the foregoing authentication entity, a method for initiating callback in the emergency service is further provided according to the embodiments of the present invention. As illustrated in Figure 4, the method includes the following main steps.

In S1-1, the callback initiator side receives the request message.

The request message received by the callback initiator side includes the following two scenarios.

SCENARIO ONE: The received request message carries a PSAP indicator or a specific value of the header, or the received request message is transmitted by a specific IP contact manner. In other words, the identity of the initiator of the received request message is identified as PSAP.

SCENARIO TWO: The received request message does not carry a PSAP indicator or the received request message is transmitted by a non-specific IP contact manner. In other words, the identity of the initiator of the received request message is not identified as PSAP.

In S1-2, the callback initiator side authenticates the identity of the initiator of the request message.

The callback initiator-side may be a direct or indirect trusted domain of the callee connection network so as to make the callee connection network to trust and accept the authentication upon the initiator identity done by callback initiator side. A certain net element in the trust domain may be informed of the real identity of the initiator from the P-Asserted-Identity field (initiator identity) of the message.

In S1-3, request messaged is forwarded to the callee connection network and the callee connection network is informed of the identity of the initiator of the request message.

Corresponding to the two scenarios in step S1-1, two situations exist in the process of callback initiator forwarding and informing of the identity of the initiator of the request message.

Corresponding to SCENARIO ONE of the step S1-1: After authenticating the identity of the initiator of the request message, the callback initiator side makes modification to the identifier. If the initiator is recognized as PSAP, such identifier is confirmed and transmitted directly or via a specific IP contact manner to the callee connection network; otherwise, the request message is rejected directly. Alternatively, the indicator or the header value included in the message is deleted, or the message is transmitted via a non-specific IP contact manner to the callee connection network.

Corresponding to SCENARIO TWO of the step S1-1: After the callback initiator side authenticates the identity of the initiator of the received request message, a corresponding processing is performed. If the initiator is confirmed as PSAP, a PSAP indicator is added to the request message or the request message is transmitted via a specific IP contact manner to the callee connection network. If the initiator is confirmed as not being the PSAP, the request message is rejected directly. Alternatively, the request message may be transmitted directly or transmitted via a non-specific IP contact manner to the callee connection network. Accordingly, the callee connection network may be able to know the identity of the initiator of the request message.

So far, the description of the authentication entity and the method for initiating the callback in the emergency service according to embodiments of the present invention is completed.

To prevent the user from maliciously performing emergency registration with the emergency user ID to receive unauthorized service, and to further provide a mechanism of authenticating the PSAP identity of the initiator of the received callback request message in the callee connection network in terms of the callback in the emergency service and method thereof so as to handle the callback request message accordingly, the main principle of the recognition entity and the method for receiving callback in the emergency service according to embodiments of the present invention is illustrated below. After receiving the callback request, the callee connection network first recognizes whether the identity of the initiator of the callback request message is recognized as PSAP. If so, the validity of the identity of the initiator of the callback request message needs to be modified before further processing the callback request message; otherwise, post-processing may be carried out directly.

A recognition entity according to the embodiments of the present invention is configured to recognize the identity of the initiator who initiates the callback request message transmitted from the call initiator-side network and perform post-processing depending on whether the identity of the initiator is a valid PSAP.

A first embodiment of the callee connection network is provided. The recognition entity includes at least a first recognition entity, configured to recognize the identity of the initiator of the callback request message transmitted from the call initiator-side network, and configured to reject the callback request message directly when the initiator identity is confirmed as an invalid PSAP.

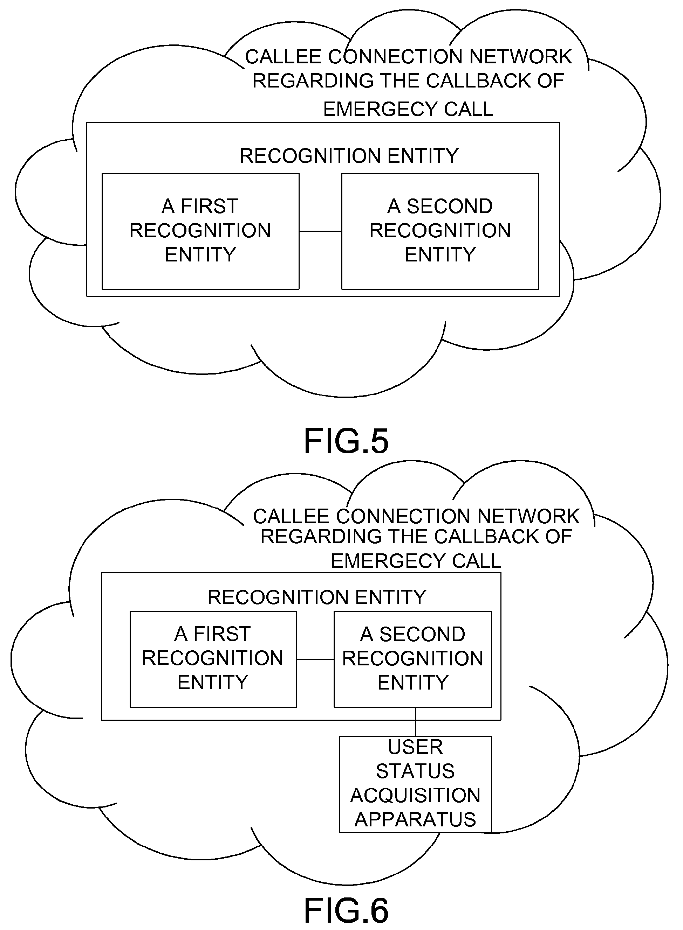

A second embodiment of the callee connection network is illustrated in Figure 5. The recognition entity includes a first recognition entity and a second recognition entity which couples with each other, wherein the first recognition entity precedes the second recognition entity in processing the callee request message. The first recognition entity and the second recognition entity can be configured together or configured separately. If the second recognition entity is located in the HSS, I-CSCF, S-CSCF, P-CSCF or AS, or an interface exists between the second recognition entity and HSS, I-CSCF, S-CSCF, P-CSCF or AS, all of which are independent of each other, then the first recognition entity and the second recognition entity may be configured separately. If the second recognition entity is located in the IBCF, I-CSCF, or an interface exists between the second recognition entity and the IBCF, I-CSCF, all of which are independent of each other, the first recognition entity and the second recognition entity are configured together.

The first recognition entity is configured to recognize whether the identity of the initiator of the callback request message transmitted from the call initiator-side network is PSAP, and modify the identifier after determining the validity of the identity of the initiator of the callback request message (the modification includes but not is limited to deleting the identifier, forwarding the request message via a non-specific contact manner, identifying the identity of the callback request message initiator as invalid.)

Moreover, after the first recognition entity receives the callback request message from the trusted domain, the first recognition entity recognizes whether the callback request message initiator is a valid PSAP according to the indicator included in the callback request message or according to a specific header value or according to whether the callback request message is transmitted via a specific IP contact manner. Alternatively, the validity of the callback request message may also be determined by digital signature. If the first recognition entity determines that the PSAP identity of the callback request message initiator is valid, the PSAP identity of the callback request is confirmed; otherwise, the validity of the identity of the callback request message initiator is denied. After the first recognition entity denies the validity of the identity of the callback request message initiator, one of the following approaches may be used to handle the message. If the callback request message carries the indicator or header value indicating that the identity of the callback request message initiator is PSAP, the indicator or header value is deleted. If the callback request message carries the indicator or header value indicating that the identity of the callback request message is PSAP, the callback request message is forwarded via a non-specific IP contact manner. If the callback request message is transmitted via a specific IP contact manner, the identity of the callback request message initiator is identified as invalid PSAP. If the callback request message is transmitted via a specific IP contact manner, the callback request message is forwarded via a non-specific IP contact manner.

The second recognition entity is configured to recognize the identity of the callback request message initiator and process the callback request message accordingly after receiving the callback request message (including the callback request message modified by the first recognition entity and the callback request message transmitted from the initiator-side network whose initiator is not identified as PSAP). If the second recognition entity recognizes that the identity of the initiator of the received callback request message is PSAP, the call service is continued immediately. If the second recognition entity recognizes that the identity of the callback request message initiator is not PSAP, the second recognition entity rejects the request message directly or handles the callback request message according to the user status.

A third embodiment of the callee connection network is provided. The recognition entity includes a first recognition entity and a second recognition entity which couples with each other, wherein the first recognition entity precedes the second recognition entity in processing the request message of the called party. The location and the function of the first recognition entity and the second recognition entity are the same as those of the second embodiment of the callee connection network. If the second recognition entity handles the callback request message according to the user status, and the second recognition entity has not stored user's current status information (for example, the second recognition entity is not located in the HSS), the network may further include a user status acquisition apparatus, as shown in Figure 6. The apparatus is configured to interact with the net element that stores the user's current status information so as to acquire the user's current status and transmit the acquired information to the second recognition entity. If the user status acquisition apparatus is located in the S-CSCF, the interface between the S-CSCF and HSS is extended. During user registration, the HSS would inform the S-CSCF of the user status information so as to let the user status information acquisition apparatus be informed of the user status information. If the user status acquisition apparatus is located in the AS, a Sh interface between the AS and the HSS is extended. The user status information may be acquired from the HSS through the Sh interface.

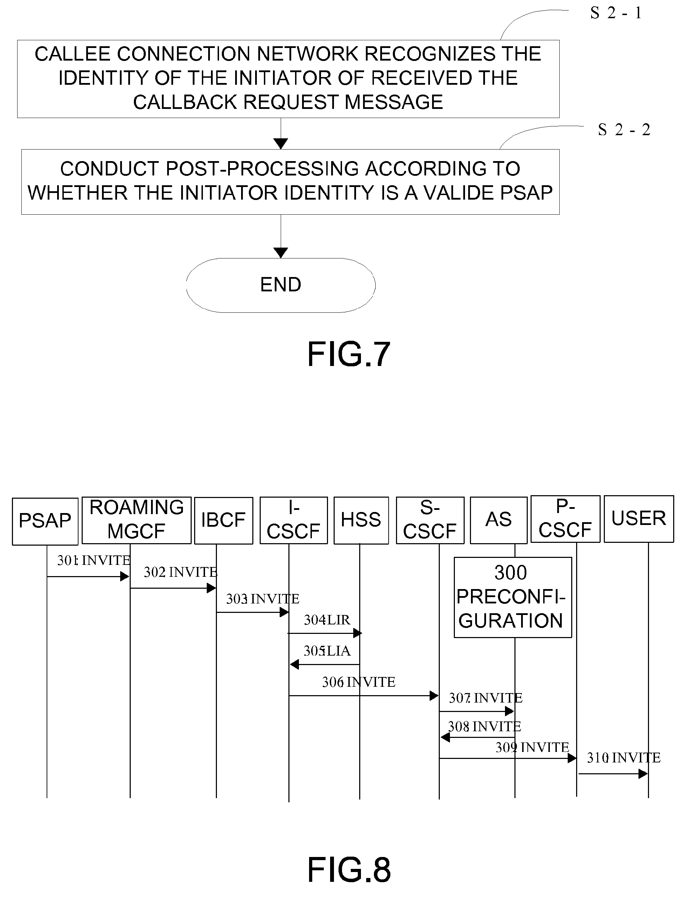

With the foregoing recognition entity, a method for receiving callback in the emergency service is further provided according to the embodiments of the present invention. As illustrated in Figure 7, the method mainly includes the following steps.

In S2-1, the callee connection network recognizes the identity of the initiator of the callback request message transmitted from the call initiator-side network.

If the callee connection network recognizes that the callback request message transmitted from the call initiator-side network carries an indicator or a specific header value or recognizes that the callback request message is transmitted via a specific IP contact manner, the identity of the callback request message initiator is recognized as PSAP. Otherwise, the identity of the callback request message initiator is recognized as not being the PSAP.

In step S2-2, post-processing is carried out according to whether the identity of the initiator is a valid PSAP.

If the identity of the initiator is identified as PSAP, the callee connection network determines whether the callback request message whose initiator is recognized as PSAP by the callee connection network is from a trusted domain of the network, or determines whether the indicator or the header value is added by a trusted net element so as to determine the validity of the callback request message.

Further, if the validity of the PSAP identity of the initiator of the callback request message is determined, the identity of initiator of the callback request is confirmed. Otherwise, if the callee connection network determines that the identity of the initiator of the callback request message is not a valid PSAP, the callback request message is rejected directly or the callback request message is modified. When the callee connection network confirms that the identity of the initiator of the callback request message is not a valid PSAP, modifications to the callback request message includes one of the followings. If the callback request message carries the indicator or header value indicating that the identity of the callback request message initiator is PSAP, the indicator or header value is deleted. If the callback request message carries indicator or header value indicating that the identity of the callback request message is PSAP, the callback request message is forwarded via a non-specific IP contact manner. If the callback request message is transmitted via a specific IP contact manner, the identity of the initiator of the callback request message is identified as invalid PSAP. If the callback request message is transmitted via a specific IP contact manner, the callback request message is forwarded via a non-specific IP contact manner. After modifying the callback request message, the modified callback request message needs to be recognized again. After the identity of the initiator of the modified callback request message is recognized as PSAP, the call service is instructed to be provided immediately. When the identity of the initiator of the modified callback request message is determined as not being PSAP, the callback request can be rejected directly or the callback request message is handled according to the user's current status after the user's current status is acquired.

If the identity of the initiator is not identified as PSAP, and when the identity of the initiator of the received request message is confirmed as PSAP, the call service is instructed to be provided immediately. When it is recognized that the identity of the initiator of the received callback request message is not PSAP, the callback request can be rejected directly or the callback request message is handled according to the user's current status after the user's current status is acquired.

So far, the description of the recognition entity and the method for receiving the callback according to the embodiments of the present invention has been completed.

Four embodiments are detailed below with reference to the above method and network for transmitting and receiving the callback in the emergency service.

EMBODIMENT ONE - callback procedure: The PSAP, located in the IP domain, utilizes the S-CSCF in the roaming region as a proxy. The PSAP indicates the PSAP identity of the calling party by adding an indicator in the SIP message, and performs policy check at the AS. As shown in Figure 8, the callback according to this embodiment includes the following steps.

In step 300, a service rule needs to be configured for the emergency user ID. The rule should ensure that the policy check should be performed at the AS when the emergency user ID becomes the called party. The AS may acquire the policy related information. For instance, if the user is located in a non-contracted roaming region, or if the subscriber is delinquent. These messages can be acquired from the HSS through Sh interface. If the policy is that only PSAP is allowed to call the emergency user ID, the AS may not need to acquire user information.

In step 301, the PSAP, located in the IP domain, calls the called user. An indicator may be added into the SIP message during transmission. The indicator may indicate that this is a valid PSAP callback. Specifically, the indicator may be a header, for example, "P-Caller-Category:PSAP", "Priority:emergency", "P-Asserted-Identity: "PSAP" <tel:+911>", "P-Asserted-Identity: "PSAP" <urm:service:sos>", etc. Alternatively, the indicator may also be a parameter of a header, for example, "INVITE sip:hw@home1.net;fromPSAP SIP/2.0", etc. The PSAP transmits the request carrying the indicator to a certain entity which can authenticate the PSAP identity and which is in the direct or indirect trusted domain of the home network of the called user. The entity used herein is a certain S-CSCF which is in the place where PSAP locates and has trusted relationship with the home network of the called user.

In step 302, the S-CSCF authenticates the identity of the PSAP. If the identity is confirmed as PSAP, the request is forwarded to the home network of the called user. If the identity cannot be confirmed as PSAP, the S-CSCF may delete a potential fake indicator in the INVITE message before forwarding the request to the home network of the called user, or reject this request directly.

In step 303, the entry point of the home network, IBCG, receives the INVITE message. If the request is found to be from an untrusted domain and carries indicator indicative of a callback, the IBCF may delete the indicator in the request before delivering the request to the I-CSCF. Alternatively, the IBCF may also reject the request directly. If the request is from the trusted domain, the request may be forwarded to the I-CSCF directly.

In step 304, the I-CSCF transmits an LIR message to the HSS to acquire the S-CSCF where the user locates at present.

In step 305, the HSS returns an LIA message carrying the name of the S-CSCF.

In step 306, the I-CSCF transmits the request to the S-CSCF.

In step 307, the S-CSCF triggers a service in a corresponding AS according to the contract information of the user.

In step 308, the AS receives the INVITE message and checks whether the message includes an indicator indicating that this is a valid callback. If the message includes such indicator, the AS forwards the request. If not, the AS may determine whether or not to reject the request according to the policy (reject directly, or reject the request only when the user is not allowed to receive service under normal conditions).

In steps 309-step 310, the S-CSCF transmits the request to UE through the P-CSCF.

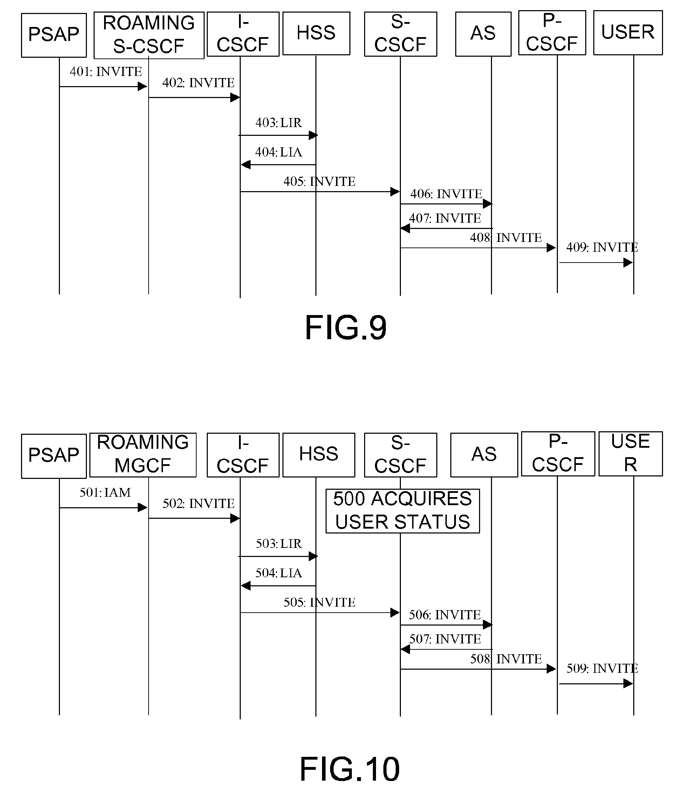

EMBODIMENT TWO - callback procedure: The PSAP, located in the IP domain, utilizes the MGCF of the roaming region as a proxy calling user. The PSAP utilizes a specific IP contact manner to indicate that this is a callback. The IP contact manner refers to IP address, port, SPI of the IPSEC, GRE tunnel identifier, or identifier that the communication protocol on the IP layer uses to recognize the session, or the combination thereof. A policy check may be performed at I-CSCF or HSS. As shown in Figure 9, the callback procedure according to this embodiment includes the following steps.

In step 401, the PSAP, located in the IP domain, calls the called party. The PSAP transmits the request to a certain entity which can authenticate the PSAP identity and which is in the direct or indirect trusted domain of the home network of the called user. The entity used herein is a certain MGCF which is in the place where PSAP locates and has trusted relationship with the home network of the called user.

In step 402, the MGCF authenticates the identity of PSAP. If the identity is confirmed as PSAP, the request will be forwarded using a specific IP contact manner to an entry point of the home network of the called party, for instance, a specific port. If it cannot be confirmed as PSAP, MGCF may forward the request using a normal IP contact manner regarding the entry IP point of the home network of the called party, or may reject the request directly.

In step 403, after the entry point I-CSCF of the home network receives the INVITE request, if the INVITE message is received via the specific IP contact manner of the entry point, the request may be determined whether it is from a trusted domain. If the message is from a trusted domain, the I-CSCF will transmit a request for LIR message to the HSS for querying the S-CSCF. The LIR carries an indicator indicating that the LIR message is triggered by a valid callback. Otherwise, the I-CSCF may reject the INVITE message or may not provide the indicator indicating the LIR message is triggered by a valid PSAP callback in the LIR message transmitted to HSS for query.

In step 404, after receiving the LIR message, the HSS may check whether there is any indicator indicating that the LIR message is triggered by a valid callback. If the LIR message has an indicator indicating that the LIR message is triggered by a valid PSAP, the HSS may return a success LIA message to the I-CSCF. Otherwise, the HSS may respond to the I-CSCF according to a local policy.

The procedures of step 403, 404 may also be altered so that the I-CSCF can also be indicated by HSS via LIA and the I-CSCF is made to check whether the initiator of the session message is a valid PSAP. If the I-CSCF can confirm that the initiator is a valid PSAP, further processing will be conducted normally. Otherwise, the I-CSCF will reject the request.

In steps 405∼407, the I-CSCF forwards the request to the S-CSCF. The S-CSCF may trigger associated service according to the user configuration.

In steps 408-step 409, the S-CSCF transmits the request to UE via P-CSCF.

EMBODIMENT THREE - callback procedure: The PSAP, located in the PSTN domain, utilizes the MGCF of the roaming region to access the IMS domain. The PSAP indicates that this is a valid PSAP callback by carrying an indicator in the SIP message. A policy check is conducted in the S-CSCF. As shown in Figure 10, the callback procedure according to this embodiment includes the following steps.

In step 500 (optional), the S-CSCF acquires the user status information. For example, if the user is in the non-contracted roaming place, or if the subscriber is delinquent, etc., the S-CSCF may be informed of the information by the HSS during the user registration process.

In step 501, the PSAP, located in the PSTN, accesses the IMS via the MGCF of the roaming region.

In step 502, suppose that the MGCF is located in the trusted domain of the home network of the called user and the MGCF performs authentication on the PSAP identity. If identity is confirmed as PSAP, an indicator is added into the SIP message to indicate that this is a valid PSAP callback. Specifically, the indicator may be a header, for example, "P-Caller-Category:PSAP", "Priority:emergency", "P-Asserted-Identity: "PSAP" <tel:+911>", "P-Asserted-Identity: "PSAP" <urn:service:sos>", etc. Alternatively, the indicator may also be a parameter of a header, for example, "INVITE sip:hw@home1.net;fromPSAP SIP/2.0", etc. Then, the request is transmitted to the home network of the called user. If the MGCF does not belong to the trusted domain of the home network of the called user, the MGCF may transmit the request to a certain entity which can authenticate the PSAP identity and which is in the direct or indirect trusted domain of the home network of the called user. The entity may transmit the request message which carries the indication of a callback to the home network of the called user.

In step 503, after the entry point I-CSCF of the home network receives the INVITE request, the HSS transmits the LIR request for querying the S-CSCF.

In step 504, the HSS returns S-CSCF name via LIA.

In step 505, the I-CSCF forwards the request to the S-CSCF. If the INVITE message is from an untrusted domain, the I-CSCF may delete the indicator indicating that the request is a callback in the INVITE message. The deletion of the indicator may also be conducted when the I-CSCF receives the INVITE request.

In step 506, after the S-CSCF receives the INVITE message, and if the request is a callback from a valid PSAP, the S-CSCF may invoke a contracted service in the AS according to user configuration. If the request cannot be confirmed as a callback from a valid PSAP, the S-CSCF may handle the request according to policy. If the policy is that only PSAP is allowed to call back the emergency ID, the S-CSCF will reject the request. If the policy is so that the request is rejected only when the user is not allowed to receive service under normal conditions, the S-CSCF may determine whether or not to reject the request according to the acquired user status information.

In step 507, the AS returns INVITE request to the S-CSCF.

In steps 508-step 509, the S-CSCF transmits the request message to UE through the P-CSCF.

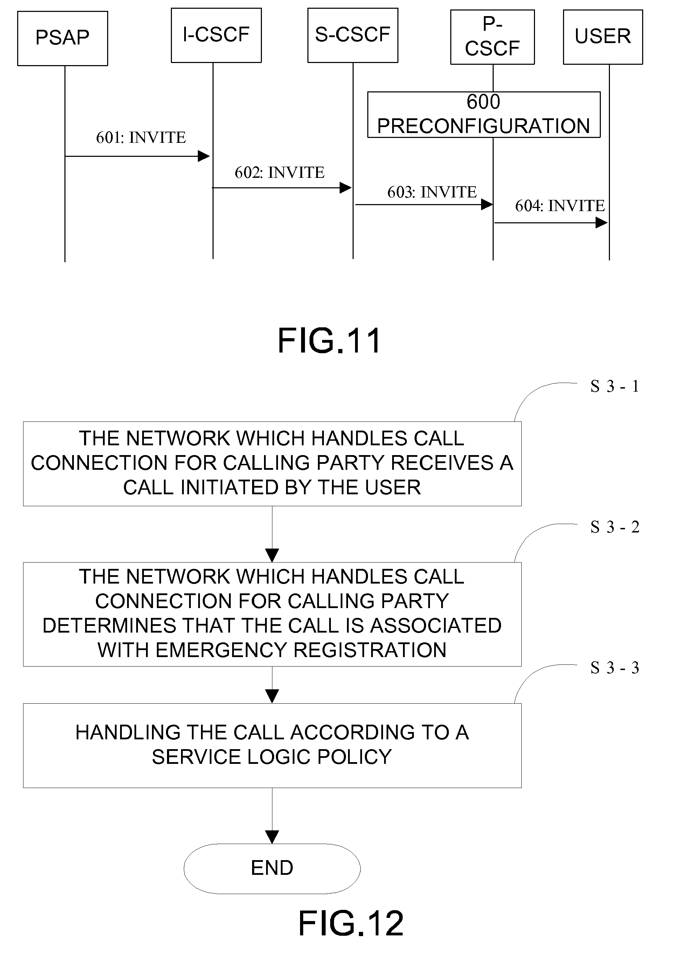

EMBODIMENT FOUR - callback procedure: The P-CSCF recognizes the validity of the PSAP according to the header value, P-Asserted-Identity, in the callback request message, and rejects the PSAP that is not trusted. As shown in Figure 11, the callback procedure according to this embodiment includes the following steps.

In step 600, the P-CSCF defines some particular sip or/and tel value as a valid PSAP user identity, and, at the same time, the P-CSCF specifies that the calls initiated from the PSAP in the PSTN domain may all access the IMS network through the MGCF of the visit region.

In steps 601∼602, the PSAP initiates the callback request which is then forwarded to the S-CSCF via I-CSCF.

In step 603, the S-CSCF forwards the request to the P-CSCF. The P-CSCF compares the user identity identified by P-Asserted-Identity (e.g., +86-755-28880119) with a predetermined value. If the P-Asserted-Identity falls within the predetermined value, the call is confirmed as a valid callback. Otherwise, the request is rejected.

In step 604, the P-CSCF will forward the trusted call request to the UE.

To prevent the user from maliciously performing emergency registration with the emergency user ID to receive unauthorized services and to further add a policy that is able to recognize and block the user who initiates a call request with the emergency user ID, a method for call connection in the emergency service is also provided according to embodiments of the present invention. As shown in Figure 12, the method mainly includes the following steps.

In step S3-1, the network which handles the call connection for the calling party receives the call initiated by the user.

The network device which handles the call connection for the calling party includes P-CSCF, IBCF, I-CSCF, S-CSCF, AS and HSS.

In step S3-2, if the network which handles the call connection for the calling party determines that the call is associated with the emergency registration (the call associated with the emergency registration may carry a user ID in the implicit registration set, or may not include a user ID in the implicit registration set), the method proceeds to step S3-3.

In S3-3, the call is handled according to a service logic policy.

The service logic policy includes one of the followings.

A first service logic policy: rejecting the call after the call is determined as a non-emergency call.

A second logic service: The call is transmitted to a post-processing entity. The call may be rejected after the post-processing entity determines the call as a non-emergency call.

A third service logic policy: rejecting the call directly.

A fourth service logic policy: Whether or not to reject the call is determined according to the user's current status. The call is rejected only when the user is both in the non-contracted roaming region and is delinquent.

The device which corresponds to the detailed process of the call connection in the step S3-1 is described below.

The device which handles the call connection may be a P-CSCF. When the P-CSCF receives the emergency registration related call initiated by the user (the call may include the user ID in the implicit registration set, but may also not include the user ID in the implicit registration set), the service logic policy (the first service logic policy) is adopted. If it is determined that the call is not an emergency call request, the request is rejected.

Alternatively, if the call, initiated by the user and received by the P-CSCF, is a request associated with the emergency registration (the call may include the user ID in the implicit registration set, but may also not include the user ID in the implicit registration set), the request will be transmitted to E-CSCF. The P-CSCF which handles the call connection for the calling party may only incorporate E-CSCF related information in the route header in the request message to be transmitted to the E-CSCF. Alternatively, after the E-CSCF receives the request message, the route header in the request message is cleared. Alternatively, when the E-CSCF forwards the request message, only the information related to the next hop is included in the route header in the request message. In the post-processing, the processing entity (the entity may be an E-CSCF, Location Retrieval Function, LRF, or PSAP) follows the service logic policy (the second service logic policy), that is, when the processing entity is informed that the emergency call request is not an emergency request, the request is rejected.

For the foregoing two situations where the P-CSCF serves as a device for handling call connection, the method for P-CSCF recognizing whether the call request is associated with emergency registration (the call may include the user ID in the implicit registration set, but may also not include the user ID in the implicit registration set) includes determining that the call request is associated with the emergency registration (the call may include the user ID in the implicit registration set, or may also not include the user ID in the implicit registration set) according to the feature of the characters of the user identity ID used in the call request or in the implicit registration set regarding the user identity. For example, if the user identity includes a special "SOS" field, the call is deemed as associated with the emergency registration (the call may include the user ID in the implicit registration set, or may also not include the user ID in the implicit registration set). Alternatively, during registration, the P-CSCF deems all call requests related to the registration as associated with the emergency registration according to the feature of characters of the identity of the user who registers successfully (the call may include the user ID in the implicit registration set, or may also not include the user ID in the implicit registration set). For example, the user identity used during registration of the request message includes a special "SOS" field. Alternatively, during registration, the P-CSCF deems all call requests related to the registration as associated with the emergency registration according to some characteristic indicator in the registration response message (the call may includes the user ID in the implicit registration set, or may also not include the user ID in the implicit registration set). For instance, the response message does not include service-route header or the implicit set carrying registration success indication in the response message may include the user identity ID including characters with a particular pattern. Alternatively, the P-CSCF recognizes the registration as an emergency registration directly according to an indicator in the registration request. The P-CSCF deems all call requests related to the registration as associated with the emergency registration. (The call may include the user ID in the implicit registration set, or may also not include the user ID in the implicit registration set.)

The device for handling call connection may be an HSS, IBCF or I-CSCF. When the call received by the HSS, IBCF or I-CSCF is associated with the emergency registration, the HSS, IBCF or I-CSCF may directly reject the request according to the service logic policy (the third service logic policy). The method for S-CSCF to recognize whether or not the call request is associated with the emergency registration (the call may includes the user ID in the implicit registration set, or may also not include the user ID in the implicit registration set) includes determining that the call request is associated with the emergency registration (the call may include the user ID in the implicit registration set, or may also not include the user ID in the implicit registration set) according to the feature of the characters of the user identity used in the call request or by checking the feature of the characters of the user identity ID in the implicit registration set regarding the user identity. For example, the user identity includes a special "SOS" field. Alternatively, during registration, the S-CSCF deems all call requests related to the registration as associated with the emergency registration according to the feature of characters, header or parameter, etc. relating to the user identity used during registration (the call may includes the user ID in the implicit registration set, or may also not include the user ID in the implicit registration set). For example, the user identity used includes a special "SOS" field. Alternatively, during registration, the S-CSCF is informed that all the call requests related to the registration as associated with the emergency registration through the instruction delivered by the HSS (the call may include the user ID in the implicit registration set, or may also not include the user ID in the implicit registration set).

When the device for handling the call connection is S-CSCF, the S-CSCF rejects the call according to the emergency user ID utilized by the user in compliance with the service logic policy (the third service logic policy). Alternatively, the S-CSCF rejects the call according to instruction. The way to acquire instruction by the S-CSCF is described below. If the user utilizes the emergency registration, the HSS timely delivers instruction to the S-CSCF according to the service logic policy (the fourth service logic policy). According to the instruction, the S-CSCF may reject the call initiated by the user. The instruction delivery policy includes delivering instruction at any time or delivering instruction only when the user exceeds his authority (the user is in the non-contracted roaming region, or the subscriber is delinquent).

When the device for handling call connection is AS, the AS rejects the call according to the service logic policy (the third service logic policy). Alternatively, the caller connection network creates an Initial Filter Criteria (iFC) for the call associated with the emergency registration. The HSS delivers the iFC to the S-CSCF according to a service logic policy (the fourth service logic policy). The policy can be delivered at any time or delivered only when the user exceeds his authority. According to the iFC, the S-CSCF may forward the call request using the emergency user ID to the specified AS. The AS directly rejects the request.

Alternatively, when the device for handling call connection is AS, and if the user utilizes the emergency registration, the HSS may deliver instructions to AS according to service logic policy (the fourth service logic policy). According to the instruction, the AS may reject the call initiated by the user. The instruction delivery policy includes delivering the instruction at any time or delivering the instruction only when the user exceeds his authority.

The foregoing method for call connection in the emergency service is described below in connection with six embodiments.

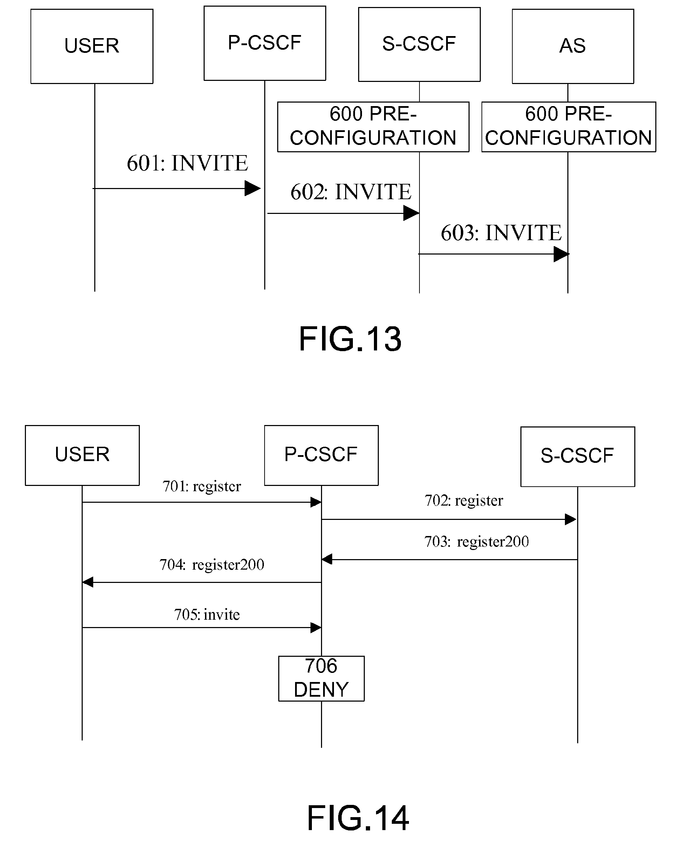

EMBODIMENT ONE - calling procedure: The user initiates a calling procedure using an emergency user ID. As shown in Figure 13, the calling procedure according to this embodiment includes the following steps.

In step 600 (optional), the user utilizes an emergency user identifier "user@sos.company.com" to transmit a registration request. The S-CSCF acquires instruction to reject the calling party with respect to the emergency user ID. The instruction may be informed to the S-CSCF via HSS during user registration, or may be acquired according to the characteristics of the user ID used during registration. Alternatively, the AS may acquire the instruction of rejecting the calling party with respect to the emergency user ID. The instruction may be acquired from HSS via Sh interface.

In steps 601-602, the P-CSCF transmits all of the non-emergent INVITE messages initiated by the user to the S-CSCF. The S-CSCF may reject the request according to instruction or "SOS" field in the emergency user ID, or may forward the request to the specified AS according to iFC.

In step 603, after the AS receives the calling request, the AS may reject the request immediately or according to instruction.

EMBODIMENT TWO - calling procedure: The user initiates a calling procedure with the emergency user ID. The P-CSCF rejects the call. As shown in Figure 14, the calling procedure according to this embodiment includes the following steps.

In steps 701∼702, the UE transmits the registration request with the emergency user ID "user@sos.company.com". The P-CSCF recognizes that this is an emergency registration with an emergency user ID according to the SOS fields in the user ID.

In steps 703∼704, the S-CSCF returns a response message of a successful registration. The response message includes an implicit registration set where the "user@sos.company,com" locates. The P-CSCF may forward the response message to UE.

In step 705, the UE initiates a non-emergency call.

In step 706, if the P-CSCF determines that the UE initiated call is a non-emergency call and the call is associated with the emergency registration, the request is rejected.

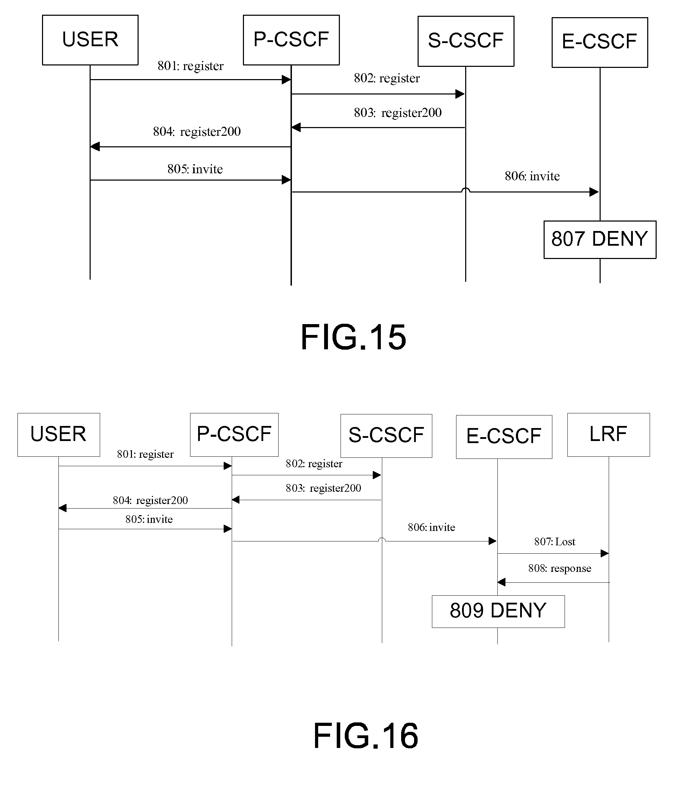

EMBODIMENT THREE- calling procedure: The user initiates a calling procedure with the emergency user ID. The E-CSCF rejects the call. As shown in Figure 15, the calling procedure according to this embodiment includes the following steps.

In steps 801∼802, the UE initiates a registration request with an emergency user ID user@)sos.company.com. The P-CSCF forwards the request message to the S-CSCF.

In steps 803∼804, the S-CSCF returns a response message representative of a successful registration. The response message does not include a service-route header. If the P-CSCF checks that the response message does not include the service-route header, the P-CSCF is informed that the registration may initiate the emergency call only. The P-CSCF forwards the response message to the UE.

In step 805, the UE initiates a non-emergency call.

In step 806, since the call is associated with the foregoing registration, the P-CSCF may forward all of the call requests initiated by the UE to the E-CSCF. Prior to forwarding the message, the P-CSCF specifies the route header as including the E-CSCF information only.

In step 807, when the E-CSCF recognizes that the call is not an emergency call according to the fields regarding the called party, the request is rejected.

EMBODIMENT FOUR - calling procedure: The user initiates a calling procedure with the emergency user ID. The E-CSCF rejects the call according to a response from the LRF. As shown in Figure 16, the calling procedure according to this embodiment includes the following steps.

In steps 801∼802, the UE transmits a request carrying a header featuring "priority:emergency" to perform registration, the P-CSCF forwards the request message to the S-CSCF.

In steps 803∼804, the S-CSCF returns a response message representative of a successful registration. The P-CSCF recognizes that this registration is an emergency registration according to the characteristic indicator "priority: emergency." The P-CSCF forwards the response message to the UE.

In step 805, the UE initiates a non-emergency call.

In step 806, since the call is associated with the foregoing registration, the P-CSCF may forward all of the call requests initiated by the UE to the E-CSCF.

In steps 807∼808, the E-CSCF transmits the field and location information of the called party to the LRF via Lost protocol. The LRF recognized that the called party of the call is not an emergency service and returns a response of failure.

In step 809, the D-CSCF rejects the call request according to LRF response.

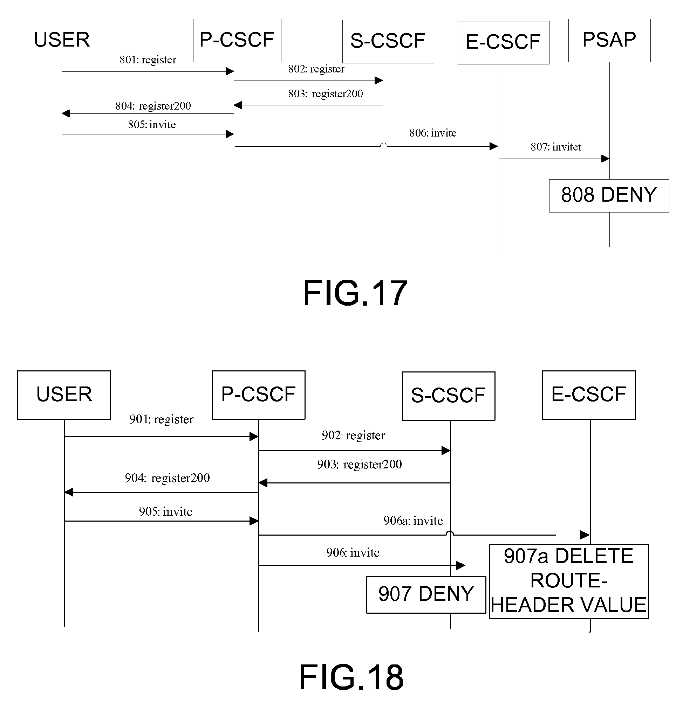

Embodiment FIVE - calling procedure: The user initiates a calling procedure with the emergency user ID. The PSAP rejects the call. As shown in Figure 17, the calling procedure according to this embodiment includes the following steps.

In steps 801∼802, the UE initiates a registration request with an emergency user ID user@sos.company.com. The P-CSCF forwards the request message to the S-CSCF.

In steps 803∼804, the S-CSCF returns a response message of a successful registration. The implicit registration set returned by the response message includes a user@sos.company.com. If the P-CSCF detects the "SOS" field in the user identity, the P-CSCF is informed that the registration can only initiate the emergency call. The P-CSCF forwards the response message to the UE.

In step 805, the UE initiates a non-emergency call.

In step 806, since the call is associated with the foregoing registration, the P-CSCF may forward all of the call requests initiated by the UE to the E-CSCF.

In 807, after the E-CSCF receives the request, the value in the route header is cleared and the information of a next-hop is added before forwarding the request. The E-CSCF may forward the call to the PSAP according to local configuration.

In step 808, the PSAP finds out that the request is not an emergency service request according to the fields of the called party and then rejects the request.

EMBODIMENT SIX - calling procedure: The user initiates a calling procedure with the emergency user ID. The S-CSCF rejects the call. As shown in Figure 18, calling procedure according to this embodiment includes the following steps.

In steps 901∼902, the UE initiates a registration request with an emergency user ID "user@sos.company.com". The P-CSCF forwards the request message to the S-CSCF.

In steps 903∼904, when the S-CSCF detects an "SOS" field in the registered user ID, this registration is considered as an emergency registration. The S-CSCF returns a response message representative of a successful registration. The P-CSCF forwards the response message to the UE.

In steps 905∼906, the UE initiates a call.

In step 906, if the P-CSCF recognizes that the call is not an emergency call, the P-CSCF may handle the call according to a normal call procedure and forward the request message to the S-CSCF.

In steps 906a∼907a, the P-CSCF recognizes that the call is an emergency call, the route header in the request message is configured as including the E-CSCF address only, and the message is forwarded to the E-CSCF. Alternatively, after the P-CSCF recognizes that this is an emergency call, the request may be directly forwarded to the E-CSCF. After the E-CSCF receives the request, the route header in the request message is cleared before any post-processing.

In step 907, the S-CSCF determines that this request is associated with the emergency registration, i.e., the user initiates the call with the emergency user ID, and the request is rejected.

In conclusion, the methods and apparatuses for transmitting and receiving emergency service according to the embodiments of the present invention prevent the user from receiving unauthorized services by recognizing the identity of call initiator associated with the emergency service.

Further, an authentication entity in the callback initiator-side network in the emergency service is provided according to the embodiments of the present invention. Instead of forwarding the request message immediately according to the prior art practice, the authentication entity authenticates the identity of initiator of the received request message first, then forwards the request message to the callee connection network, and informs the callee connection network of the identity of the initiator of the request message. The authentication entity may be located in the trusted domain of the callee connection network so as to let the callee connection network trust the authentication conducted by the network upon the initiator identity.

Further, a recognition entity in the callback callee connection network in the emergency service is provided according to the present invention. The recognition entity is configured to recognize the identity of the initiator of the callback request message transmitted from the call initiator-side network and is configured to perform post-processing according to whether the identity of the initiator is a valid PSAP, and thus effectively prevents the user from receiving unauthorized services.

In application of the foregoing entity, a corresponding method for initiating and receiving callback in the emergency service is further provided.

A method for call connection in the emergency service is further provided according to an embodiment of the present invention. The device which handles call connection does not directly handle the received call request like the prior art does, rather, it determines whether the call is associated with the emergency registration first. When the network which handles call continuation determines that the call is associated with the emergency registration, the call is handled according to a service logic policy. In this way, the method may effectively prevent user from receiving unauthorized services.

Apparently, a variety of modification and variation may be made by those skilled in the art without departing from the spirit and scope of the present invention. Accordingly, the present invention intends to incorporate these modifications and variations provided that these modification and variation fall within the scope of the claims of the present invention and equivalent thereof.

## Claims

1. An authentication entity, located in a callback initiator-side network of an emergency service, **characterized in that**, the authentication entity is configured to forward a request message to a callee connection network and inform the callee connection network of the identity of an initiator of the request message after authenticating the identity of the initiator of the received request message.

2. The entity of claim 1, **characterized in that**, the initiator of the request message identifies itself as a Public Safety Answering Point, PSAP, by carrying an indicator in a Session Initiation Protocol, SIP, message, or by using a specific IP contact manner.

3. The entity of claim 2, **characterized in that**, when the identity of the initiator of the request message received by the authentication entity is identified as PSAP, the authentication entity modifies the identifier after confirming the identity of the initiator of the request message; if the initiator is confirmed as PSAP, confirm the identifier and then transmit the identifier to the callee connection network; otherwise, the authentication entity rejects the request message directly, or deletes the indicator carried in the request message or transmits the request message to the callee connection network via a non-specific IP contact manner.

4. The entity of claim 2, **characterized in that**, when the identity of the initiator of the request message received by the authentication entity is not identified as PSAP, the authentication entity conducts a corresponding processing after confirming the identity of the initiator of the request message; if the initiator is confirmed as PSAP, the authentication entity adds an indicator in the request message or transmits the request message to the callee connection network via a specific IP contact manner; if the initiator is confirmed as not being the PSAP, the authentication entity rejects the request message directly, or transmits the request message to the callee connection network via a non-specific IP contact manner.

5. The entity of one of the claims 1-4, **characterized in that**, the authentication entity is located in a trusted domain of the callee connection network.

6. A recognition entity, located in a callee connection network of an emergency service, **characterized in that**, the recognition entity is configured to recognize the identity of an initiator of a callback request message and perform post-processing according to whether the identity of the initiator is a valid PSAP.

7. The entity of claim 6, **characterized in that**, the entity comprises at least:
a first recognition entity, configured to identify the identity of the initiator of the callback request message, and reject the callback request message directly when the identity of the initiator is confirmed as an invalid PSAP.

8. The entity of claim 6, **characterized in that**, the entity comprises a first recognition entity and a second recognition entity, wherein the first recognition entity precedes the second recognition entity in processing a request message from the called party; and wherein
the first recognition entity is configured to recognize whether the identity of the initiator of the callback request message is PSAP and perform modification after determining the validity of the identity of the initiator of the callback request message; and
the second recognition entity is configured to recognize the identity of the initiator of the callback request message after receiving the callback request message and process the callback request message accordingly.

9. The entity of claim 7 or 8, **characterized in that**, after the first recognition entity receives the callback request message from a trusted domain, the first recognition entity recognizes whether the initiator of the callback request message is a valid PSAP according to an indicator carried in the callback request message or according to a specific IP contact manner used to transmit the callback request message.

10. The entity of claim 8, **characterized in that**, after the first recognition entity denies the validity of the identity of the initiator of the callback request message, the first recognition entity doing a processing and the processing method includes one of the followings:
deleting an indicator if the callback request message carries the indicator identifying the identity of the initiator of the callback request message as PSAP; or
forwarding the callback request message via a non-specific IP contact manner if the callback request message carries an indicator identifying the identity of the initiator of the callback request message as PSAP; or
identifying the identity of the initiator of the callback request message as an invalid PSAP if the callback request message is transmitted via a specific IP contact manner; or
forwarding the callback request message via a non-specific IP contact manner if the callback request message is transmitted via a specific IP contact manner.

11. The entity of claim 8, **characterized in that**, the callback request message received by the second recognition entity comprises a callback request message modified by the first recognition entity and a callback request message transmitted from the initiator-side network where the identity of the initiator is identified as PSAP.

12. The entity of claim 11, **characterized in that**, the second recognition entity continue to provide call service immediately when the second recognition entity recognizes that the identity of the initiator of the callback request message is PSAP.

13. The entity of claim 11, **characterized in that**, when the second recognition entity recognizes that the identity of the initiator of the callback request message is not PSAP, the second recognition entity rejects the request message directly or handles the callback request message according to a user status.

14. The entity of claim 13, **characterized in that**, if the callback request message is handled according to the user status and the second recognition entity has not stored the user's current status information, the network further comprises:
a user status acquisition apparatus, configured to interact with a net element which stores the user status information so as to acquire the user's current status information and transmit the acquired information to the second recognition entity.

15. The entity of claim 14, **characterized in that**, an extended interface for transmitting the user's current status information exists between the user status acquisition apparatus and the net element that stores the user's current status information.

16. The entity of claim 15, **characterized in that**, if the user status acquisition apparatus is located in a Service Call Session Control Function, S-CSCF, entity, a Home Subscriber Server, HSS, informs the S-CSCF of the user status information during user registration so that the user status acquisition apparatus is informed of the user status information; or, if the user status acquisition apparatus is located in an Application Server, AS, the user status acquisition apparatus acquires the user status information from the HSS through Sh interface.

17. A method for initiating callback in an emergency service, **characterized in** comprising:
forwarding a request message to a callee connection network after a callback initiator-side network confirms the identity of an initiator of the received request message; and
enabling the callee connection network to be informed of the identity of the initiator of the request message.

18. The method of claim 17, **characterized in** identifying the identity of the initiator of the request message as Public Safety Answering Point, PSAP by carrying an indicator in a Session Initiation Protocol, SIP message or via a specific IP contact manner.

19. The method of claim 18, **characterized in that**, when the identity of the initiator of the request message received by the callback initiator-side network is identified as PSAP, modifying the identifier after confirming the identity of the initiator of the request message; if the initiator is confirmed as PSAP, confirming the identifier and transmitting the identifier to the callee connection network; otherwise, rejecting the request message directly, or deleting the indicator carried in the request message or transmitting the request message to the callee connection network via a non-specific IP contact manner.

20. The method of claim 18, **characterized in that**,
when the identity of the initiator of the request message received by the callback initiator-side network is not identified as PSAP, conducting a corresponding processing after confirming the identity of the initiator of the request message;
if the initiator is confirmed as PSAP, adding an indicator in the request message or transmitting the request message to the callee connection network via a specific IP contact manner; or
if the initiator is confirmed as not being the PSAP, rejecting the request message directly, or transmitting the request message to the callee connection network via a non-specific IP contact manner.

21. The method of claim 18, **characterized in** comprising: carrying, by the callback initiator-side network, the indicator in a header or a parameter of a header of the SIP message.

22. The method of one of the claims 17-21, **characterized in that**, the callback initiator-side network is a direct or indirect trusted domain of the callee connection network.

23. A method for receiving callback in an emergency service, **characterized in** comprising:
identifying, by a callee connection network, the identity of an initiator of a callback request message after receiving the callback request message; and
conducting a post-processing, by the callee connection network, according to whether the identity of the initiator is a valid PSAP.

24. The method of claim 23, **characterized in** comprising:
rejecting the callback request message directly when the callee connection network confirms that identity of the initiator of the callee request message is not a valid PSAP; or
modifying the callback request message and then processing the modified callback request message accordingly when the callee connection network confirms that identity of the initiator of the callee request message is not a valid PSAP.

25. The method of claim 24, **characterized in** comprising:
recognizing whether the identity of the initiator of the callback request message is a valid PSAP according to an indicator carried in the callback request message or according to whether the callback request message is transmitted via a specific IP contact manner after the callee connection network receives the callback request message from the trusted domain.

26. The method of claim 24 or 25, **characterized in that**, when the callee connection network confirms that identity of the initiator of the callee request message is not a valid PSAP, the callback request message is modified according to one of the followings:
deleting the indicator if the callback request message carries an indicator identifying the identity of the initiator of the callback request message as PSAP; or
forwarding the callback request message via a non-specific IP contact manner if the callback request message carries an indicator identifying the identity of the initiator of the callback request message as PSAP; or
identifying the identity of the initiator of the callback request message as an invalid PSAP if the callback request message is transmitted via a specific IP contact manner; or
forwarding the callback request message via a non-specific IP contact manner if the callback request message is transmitted via a specific IP contact manner.

27. The entity of claim 24, **characterized in that**, the post-processing after the modifying comprises: providing call service directly when identifying that the identity of the initiator of the callback request message is PSAP.

28. The method of claim 24, **characterized in that**, the post-processing after the modifying comprises:
rejecting the callback request directly when recognizing that the initiator of the callback request message in not PSAP; or
acquiring a user's current status and processing the callback request message according to the user's current status.

29. A method for call connection in an emergency service, **characterized in** comprising:
receiving, by a network handling call connection for a calling party, a call initiated by a user;
determining, by the network handling call connection for a calling party, the call as associated with an emergency registration; and
handling the call according to a service logic policy.

30. The method of claim 29, **characterized in that**, the service logic policy comprises one of the followings:
rejecting the call after the call is determined as a non-emergency call; or
passing the call to a post-processing entity, wherein the call is rejected after the post-processing entity determines the call as a non-emergency call; or
rejecting the call directly; or
determining whether or not to reject the call according to the user's current status.

31. The method of claim 29, **characterized in that**, after a Proxy Call Session Control Function, P-CSCF entity in the network handling the call connection for the calling party receives a call initiated by a user and associated with an emergency registration, the P-CSCF rejects the call when the call is further determined as a non-emergency call request according to the service logic policy.

32. The method of claim 29, **characterized in that**, after a proxy call session control function, P-CSCF entity in the network handling the call connection for the calling party receives a call initiated by a user and associated with an emergency registration, the P-CSCF transmits the call to an Emergency Call Session Control Function, E-CSCF entity according to the service logic policy and the post-processing entity rejects the call after the post-processing entity determines the call as a non-emergency call request.

33. The method of claim 32, **characterized in that**, the post-processing entity is E-CSCF entity, Location Retrieval Function, LRF entity or Public Safety Answering Point, PSAP.

34. The method of claims 31, 32 or 33, **characterized in that**, the P-CSCF determines the call request as associated with the emergency registration according to following rules:
determining that the call request is associated with the emergency registration according to the feature of characters of a user ID used in the call request or by checking the feature of characters of a user ID used in an implicit registration set regarding the user ID; or
determining, by the P-CSCF during registration, that all call requests related to the registration are associated with the emergency registration according to the feature of characters of the user ID which registers successfully or according to the feature of characters of the user ID in an implicit registration set carried in a response representative of a successful registration; or
determining, by the P-CSCF during registration, that all call requests related to the registration are associated with the emergency registration according a characteristic indicator in a registration response message; or
determining, by the P-CSCF during registration, that the call request is associated with the emergency registration according to a characteristic indicator in the registration response message and, at the meantime, by checking whether the user ID used in the call request associated with the registration comprises characters with certain feature; or
determining directly, by the P-CSCF during registration, that the registration is an emergency registration according to an indicator in the registration request and recognizing, by the P-CSCF, that all requests related to the registration are associated with the emergency registration.

35. The method of claim 34, **characterized in that**, the user ID is an emergency user ID itself or the implicit registration set comprising the emergency user ID.

36. The method of claim 29, **characterized in that**, a network device handling call connection for the calling party is one of net elements of a Service Call Session Control Function, S-CSCF entity, Application Server (AS), an Interconnection Border Control Function, IBCF entity, an Interrogating Call Session Control Function, I-CSCF entity, a Home Subscriber Server, HSS, wherein the net element directly rejects the call according to the service logic policy if the call received by the net element is associated with the emergency registration.

37. The method of claim 36, **characterized in that**, when the network device handling call connection for the calling party is S-CSCF or I-CSCF, the call request is determined as associated with the emergency registration according to following rules:
determining that a call request is associated with the emergency registration according to the feature of characters of a user ID used in the call request directly or by checking the feature of the characters of a user ID used in an implicit registration set regarding the user ID; or
determining, during registration, that all call requests relates to the registration are associated with the emergency registration according to the feature of the characters, header, or parameter of a user ID used for registration; or
learning, during registration, that all call requests related to the registration are associated with emergency registration according to an instruction delivered by the HSS.

38. The method of claim 29, **characterized in that**, if the call is determined as associated with the emergency registration,
passing an instruction by a Home Subscriber Server, HSS to a Service Call Session Control Function, S-CSCF entity according to the service logic policy; and
rejecting the call by the S-CSCF according to the instruction, wherein the policy of passing the instruction comprises passing the instruction at any time or passing the instruction only when the user exceeds his authority.

39. The method of claim 29, **characterized in that**, if the call is determined as associated with the emergency registration,
passing an instruction by an Home Subscriber Server, HSS to an AS according to the service logic policy; and
rejecting the call by the AS according to the instruction, wherein the policy of passing the instruction comprises passing the instruction at any time or passing the instruction only when the user exceeds his authority.

40. The method of claim 29, **characterized in** comprising:
creating, by a caller connection network, an iFC for the call associated with the emergency registration;
delivering the iFC, by a Home Subscriber Server, HSS, to the S-CSCF according to the service logic policy wherein the policy comprises passing the instruction at any time or passing the instruction only when the user exceeds his authority;
forwarding by the S-CSCF a calling request associated with the emergency registration to a specified AS according to the iFC; and
rejecting the request directly by the AS.
